# EUROPEAN PATENT APPLICATION

(11) **EP 1 836 893 A1**
(43) Date of publication of application: **26.09.2007**
(21) Application number: 06005946.6
(22) Date of filing: 23.03.2006
(51) Int. Cl.: A01K 27/00, A01K 11/00, A45C 13/42

(54) **Pet identification tag**

(71) Applicant: ROGZ (Pty) Ltd., Omuramba Park Montague Gardens (ZA)
(72) Inventor: Fuller, Andrew, Paul, Jakkalsfontein Coastal Estate (ZA); Raubenheimer, Irene, Sunset Beach 7441 (ZA)
(74) Representative: Samson & Partner

(57) **Abstract**

This invention provides for a pet identification tag 10 which includes a display portion 12, an information sheet 16, and a backing portion 14. Also included is an attachment means 18 for attaching said tag 10 to a collar of a pet.

## Description

### Field of the Invention

This invention relates to a pet identification tag and, more specifically, to a tag on which information pertaining to the pet can be applied by the owner of the pet.

### Background to the Invention

Identification tags for pets are typically manufactured from metal and are attachable to the collar of the pet by way of a suitable attachment means. The name of the pet and telephone number of its owner are engraved or etched into the tag.

A pet owner will thus either have to order a pet tag having the desired information on it or will have to wait while such information is engraved or etched into the tag. Either way, some inconvenience and time delay are associated with obtaining a pet tag with the desired information on it as a second party must apply this information to the tag.

The inventor believes that a need exists for a pet identification tag to which the desired information may readily be applied by the owner of the pet without the need for involving a second party.

### Summary of the Invention

According to the invention, there is provided a pet identification tag including:
- an at least partially transparent display portion;
- a backing portion configured and dimensioned to overlay the display portion so as to form a closed unit; and
- an information display sheet located between the backing and display portions so that information applied to the sheet faces away from the backing portion; characterized in that the tag is provided to a user in an unassembled condition so that a user can inscribe or print the information on the information display sheet prior to joining the backing and display portions to form the unit.

The unit formed by the backing and display portions may be water-tight.

At least one of the display and backing portion may be provided with an adhesive on its contact surface to permit water-tight joining of the display and backing portions to form the closed unit. The surface to which the adhesive is applied may be covered with a removable sheet. A user may remove the sheet immediately prior to joining the display and backing portions.

The entire display portion may be manufactured from a transparent material.

Alternatively, the display portion may include a window portion manufactured from a transparent material, the window portion having approximately the same size as or being slightly smaller than the information display sheet.

The window portion may form a recess in the display portion, the recess being dimensioned to receive the information display sheet therein.

The information display sheet may be manufactured from paper or cardboard on which a user can print or inscribe the desired information. The information typically includes at least the name of the pet and the telephone number of its owner.

The tag may be provided with an attachment means to permit attachment of the tag to a collar of a pet. To this end, the tag may be provided with an opening for receiving the attachment means therethrough.

The attachment means may be in the form of a flexible band that is threaded through the opening in the tag as well as the collar after which the ends of the band are secured together. The ends of the band may be provided with male and female engaging formations respectively which may be secured together when desired. The band may be manufactured from a synthetic or natural rubber.

In one embodiment, the display and backing portions may both be manufactured from a transparent material.

The backing and display portions may be manufactured from any suitable synthetic plastics material and are typically manufactured from polyurethane.

The tag accordingly does not include any metallic components so that noise created by a pet wearing the tag is kept to a minimum.

The shape of the backing and display portions is typically round or oval in plan view. However, they may also be provided in a heart shape, a bone shape, and the like.

The backing and display portions may be flat or they may have flat contact surfaces and convex or domed exterior surfaces.

According to a further aspect of the invention, there is provided a method of producing a pet identification tag, characterized by the following steps:
- inscribing or printing information on an information display sheet;
- placing the sheet between a backing portion and an at least partially transparent display portion so that the information on the display sheet is visible; and
- joining the display and backing portions to form a closed unit.

The method may further include the step of providing the tag with an attachment means for attaching the tag to a collar of a pet.

According to yet a further aspect of the invention there is provided a kit for producing a pet identification tag, characterized in that the kit includes:
- an at least partially transparent display portion;
- a backing portion configured and dimensioned to overlay and be joined to the display portion so as to form a closed unit;
- an information display sheet on which a user can inscribe or print information;
- means for joining the backing and display portions to form the closed unit;
   and
- an attachment means for attaching the tag to a collar of a pet.

The means for joining the backing and display portions may be an adhesive applied to the contact surface of at least one of the backing and display portion.

A stencil corresponding to the size of the information display sheet may be provided instead of said sheet.

### Detailed Description of the Invention

The invention will now be described by way of the following non-limiting example with reference to the accompanying drawings.

In the drawings:
Figure 1 shows, in exploded perspective view, one embodiment of a pet identification tag, according to the invention;
Figure 2 shows, in perspective view, the pet identification tag of Figure 1 with the parts in assembled form; and
Figure 3 shows the pet identification tag of Figures 1 and 2 with an attachment means for attaching the tag to a collar of a pet.

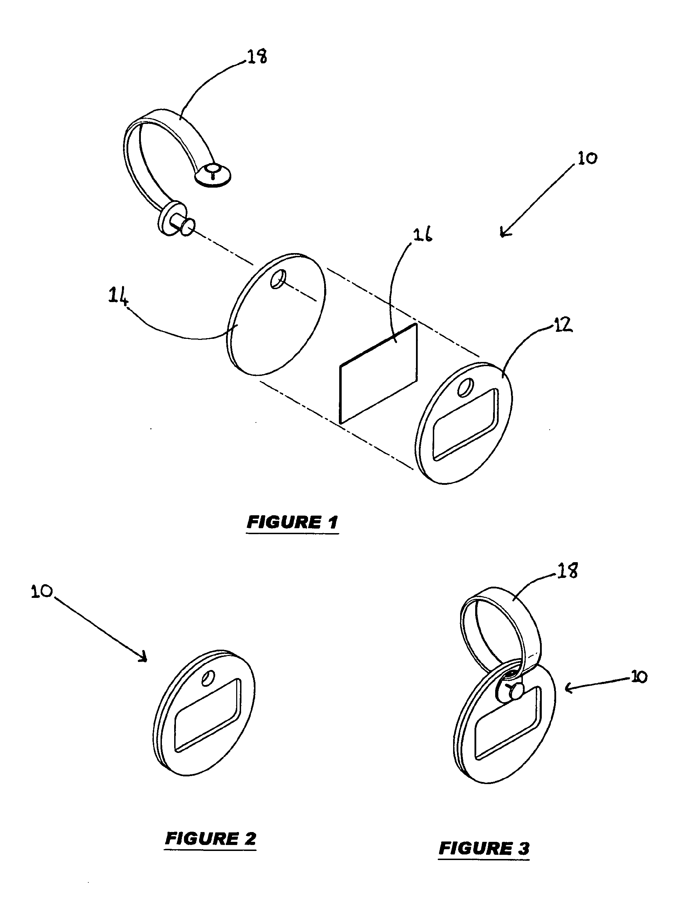

Referring now to Figure 1, the pet identification tag, in accordance with the invention is generally indicated by reference numeral 10. In the embodiment shown, the tag 10 includes an at least partially transparent display portion 12, and a backing portion 14 configured and dimensioned to overlay the display portion 12 so as to form a closed unit.

The tag 10 further includes an information display sheet 16 located between the backing and display portions 14 and 12, respectively, so that information applied to the sheet 16 faces away from the backing portion 14, so that said information is visible through a transparent portion of the display portion 12. It is to be appreciated that the tag 10 is provided to a user in an unassembled condition so that a user can inscribe or print the information on the information display sheet 16 prior to joining the backing and display portions 14 and 12 to form the unit.

In a preferred embodiment of the invention, the unit formed by the backing and display portions 14 and 12 is water-tight to avoid the ingress of any moisture and/or dirt.

In the embodiment of the invention shown, one of the display or backing portions 14 or 12 is provided with an adhesive on its contact surface to permit water-tight joining of the display and backing portions 14 and 12 to form a closed unit, as shown in Figure 2. In general, the surface to which the adhesive is applied is covered with a removable sheet (not shown). A user is then able to remove the sheet immediately prior to joining the display and backing portions 14 and 12.

In the embodiment shown, the display portion 12 includes a window portion manufactured from a transparent material, the window portion having approximately the same size as the information display sheet 16.

In a further embodiment of the invention (not shown), the entire display portion 12 is manufactured from a transparent material.

The window portion generally forms a recess in the display portion 12, the recess being dimensioned to receive the information display sheet 16 therein. This prevents the sheet 16 from moving within the assembled unit or tag 10, so that the information on the sheet 16 remains clearly visible at all times.

The information display sheet 16 is typically manufactured from paper or cardboard on which a user can print or inscribe the desired information. The information typically includes at least the name of the pet and the telephone number of its owner, or the like.

The tag 10 is generally provided with an attachment means 18 to permit attachment of the tag 10 to a collar (not shown) of a pet. To this end, the tag 10 is also provided with an opening for receiving the attachment means 18 therethrough, as shown in Figure 3 of the drawings.

In the embodiment shown, the attachment means is in the form of a flexible band 18 that is threaded through the opening in the tag 10 as well as the collar (not shown) after which the ends of the band 18 are secured together. The ends of the band 18 are provided with male and female engaging formations, respectively, which are then secured together when desired. The band 18 is typically manufactured from a synthetic or natural rubber.

In a further embodiment (not shown), the display and backing portions 14 and 12 are both manufactured from a transparent material.

The backing and display portions 14 and 12 are manufactured from any suitable synthetic plastics material and are typically manufactured from polyurethane.

Accordingly, in a preferred embodiment of the invention, the tag 10 does not include any metallic components so that noise created by a pet wearing the tag 10 is kept to a minimum.

The shape of the backing and display portions 14 and 12 is typically round or oval in plan view. However, they could also be provided in a heart shape, a bone shape, and the like.

The backing and display portions 14 and 12 are typically flat or they have flat contact surfaces and convex or domed exterior surfaces.

The invention also includes a method of producing the pet identification tag 10, as described above, which method is characterized by the steps of inscribing or printing information on the information display sheet 16, placing the sheet 16 between the backing portion 14 and the at least partially transparent display portion 12, so that the information on the display sheet 16 is visible, and then joining the display and backing portions 12 and 14 to form a closed unit or tag 10, as shown.

The method further includes the step of providing the tag 10 with an attachment means 18 for attaching the tag to a collar of a pet.

The invention extends to a kit for producing the pet identification tag 10. Such a kit generally includes an at least partially transparent display portion 12, a backing portion 14 configured and dimensioned to overlay and be joined to the display portion 12 so as to form a closed unit, an information display sheet 16 on which a user can inscribe or print information, means for joining the backing and display portions 14 and 12 to form the closed unit or tag 10, and attachment means in the form of a flexible band 18 for attaching the tag 10 to a collar of a pet.

The means for joining the backing and display portions 14 and 12 is typically an adhesive applied to the contact surface of at least one of the backing or display portion 14 or 12, respectively.

In one embodiment, a stencil corresponding to the size of the information display sheet 16 is provided instead of said sheet 16, so that a user is able to prepare the sheet 16.

It is to be appreciated, that the invention is not limited to any particular embodiment or configuration as hereinbefore generally described or illustrated.

The Inventor regards it as an advantage that the invention provides a method whereby a user is able to conveniently and efficiently apply information to a tag for a pet without requiring assistance from a second party. The Inventor regards it as a further advantage that the tag is waterproof as well as silent to minimize possible irritation to a pet wearing such a tag and to the owner of the pet. The Inventor regards it as a yet further advantage that the tag may be inexpensively manufactured and supplied in a kit form.

## Claims

1. A pet identification tag including:
- an at least partially transparent display portion;
- a backing portion configured and dimensioned to overlay the display portion so as to form a closed unit; and
- an information display sheet located between the backing and display portions so that information applied to the sheet faces away from the backing portion; **characterized in that** the tag is provided to a user in an unassembled condition so that a user can inscribe or print the information on the information display sheet prior to joining the backing and display portions to form the unit.

2. A tag as claimed in claim 1, **characterized in that** the unit formed by the backing and display portions is water-tight.

3. A tag as claimed in claim 1 or claim 2, **characterized in that** at least one of the display and backing portion is provided with an adhesive on its contact surface to permit joining of the display and backing portions to form the closed unit.

4. A tag as claimed in any one of claims 1 to 3, **characterized in that** the display portion is manufactured from a transparent material.

5. A tag as claimed in any one of claims 1 to 3, **characterized in that** the display portion includes a window portion manufactured from a transparent material, the window portion having approximately the same size as the information display sheet.

6. A tag as claimed in claim 5, **characterized in that** the window portion forms a recess in the display portion, the recess being dimensioned to receive the information display sheet therein.

7. A tag as claimed in any one of the preceding claims, **characterized in that** the tag is provided with an attachment means to permit attachment of the tag to a collar of a pet.

8. A tag as claimed in any one of claims 1 to 3, **characterized in that** the display and backing portions are manufactured from a transparent material.

9. A tag as claimed in any one of the preceding claims, wherein the backing and display portions are manufactured from polyurethane.

10. A method of producing a pet identification tag, **characterized by** the following steps:
- inscribing or printing information on an information display sheet;
- placing the sheet between a backing portion and an at least partially transparent display portion so that the information on the display sheet is visible; and
- joining the display and backing portions to form a closed unit.

11. A method as claimed in claim 10, **characterized in that** the method further includes the step of providing the tag with an attachment means for attaching the tag to a collar of a pet.

12. A kit for producing a pet identification tag, **characterized in that** the kit includes:
- an at least partially transparent display portion;
- a backing portion configured and dimensioned to overlay and be joined to the display portion so as to form a closed unit;
- an information display sheet on which a user can inscribe or print information;
- means for joining the backing and display portions to form the unit; and
- an attachment means for attaching the tag to a collar of a pet.

13. A kit as claimed in claim 12, **characterized in that** the means for joining the backing and display portions is an adhesive applied to the contact surface of at least one of the backing and display portion.

14. A kit as claimed in claim 12 or claim 13, **characterized in that**, a stencil corresponding to the size of the information display sheet is provided instead of said sheet.
